# EUROPEAN PATENT SPECIFICATION

(11) **EP 3 287 889 B1**
(45) Date of publication and mention of the grant of the patent: **30.01.2019**
(21) Application number: 17187418.3
(22) Date of filing: 23.08.2017
(51) Int. Cl.: G06F 3/12, H04N 1/00

(54) **IMAGE FORMING SYSTEM**
BILDERZEUGUNGSSYSTEM
SYSTÈME DE FORMATION D'IMAGES

(30) Priority: 26.08.2016 JP 2016166244
(43) Date of publication of application: 28.02.2018
(73) Proprietor: KYOCERA Document Solutions Inc., Osaka-shi, Osaka 540-8585 (JP)
(72) Inventor: OGASAHARA, Okito, Osaka-shi, Osaka 540-8585 (JP)
(74) Representative: Winter, Brandl, Fürniss, Hübner, Röss, Kaiser, Polte - Partnerschaft mbB

(56) References cited:
- US-A1- 2006 092 452
- US-A1- 2007 180 159
- US-B1- 7 310 159

## Description

### BACKGROUND

### 1. FIELD OF THE PRESENT INVENTION

The present invention relates to an image forming system.

### 2. DESCRIPTION OF THE RELATED ART

An image forming apparatus such as a printer or a multi function peripheral includes sorts of internal devices and performs action setting of the internal devices on the basis of setting data. In general, such setting data is manually edited by a service person or an administrator. Further, if the image forming apparatus is a high-end model that includes sensors that measure device statuses of the internal devices, the image forming apparatus can automatically edit such setting data on the basis of measurement values of the sensors.

Meanwhile, in another system, a printing apparatus that is newly connected to a network obtains setting information from another printing apparatus and applies the obtained setting information to itself.

Although the aforementioned high-end model can automatically edit the setting data on the basis of the aforementioned sensor measurement values, a low-end model that does not include such sensors can not automatically edit the setting data.

In addition, even if the printing apparatus is such low-end model, it can obtain the setting data from another apparatus. However, in the aforementioned system, the obtained setting data is applied as is and therefore such another apparatus from which the setting data can be obtained is limited to an apparatus of the same machine type. Further, if the setting information in such another printing apparatus is improper, then the improper setting information is applied.

Document US 2006/092452 A1 discloses a generic computing system with a reporter printer, a downloader printer and a server system that are connected to a network. The reporter printer comprises a temperature sensor and a humidity sensor. The downloader printer may adjust various parameters to compensate for the present ambient temperature and ambient humidity conditions.

### SUMMARY

An image forming system according to the present invention has the features of claim 1 and includes one or plural first class image forming apparatuses connected to a network, one or plural second class image forming apparatuses connected to the network, and a management server connected to the network. Each of the one or plural first class image forming apparatuses comprises a specific sensor that measures a specific device status, and automatically edits setting data on the basis of a measurement value of the specific sensor.
Each of the one or plural second class image forming apparatuses does not comprise a specific sensor that measures the specific device status. The management server includes: a machine group managing unit configured to set a machine group that includes (a) at least one of the one or plural first class image forming apparatuses and (b) at least one of the one or plural second class image forming apparatuses; a sensor value collecting unit configured to collect a measurement value of the specific sensor from the first class image forming apparatus that belongs to the machine group; and a setting data applying unit configured to generate setting data for the second class image forming apparatus that belongs to the machine group on the basis of the collected measurement value, and apply the generated setting data to the second class image forming apparatus.

If the sensor value collecting unit detects that the first class image forming apparatus automatically edited the setting data, the sensor value collecting unit collects the measurement value from the first class image forming apparatus that belongs to the machine group to which the first class image forming apparatus that automatically edited the setting data belongs; and the setting data applying unit applies the generated setting data to the second class image forming apparatus that belongs to the machine group to which the first class image forming apparatus that automatically edited the setting data belongs.

These and other objects, features and advantages of the present invention will become more apparent upon reading of the following detailed description along with the accompanied drawings.

### BRIEF DESCRIPTION OF THE DRAWINGS

Fig. 1 shows a block diagram that indicates a configuration of an image forming system in an embodiment of the present invention;
Fig. 2 shows a block diagram that indicates a configuration of a management server 1 shown in Fig. 1;
Fig. 3 shows a diagram that explains a machine group in the image forming system shown in Fig. 1; and
Fig. 4 shows a flowchart that explains a behavior of the management server 1 shown in Fig. 2.

### DETAILED DESCRIPTION

Hereinafter, embodiments according to the present invention will be explained with reference to drawings.

### Embodiment 1.

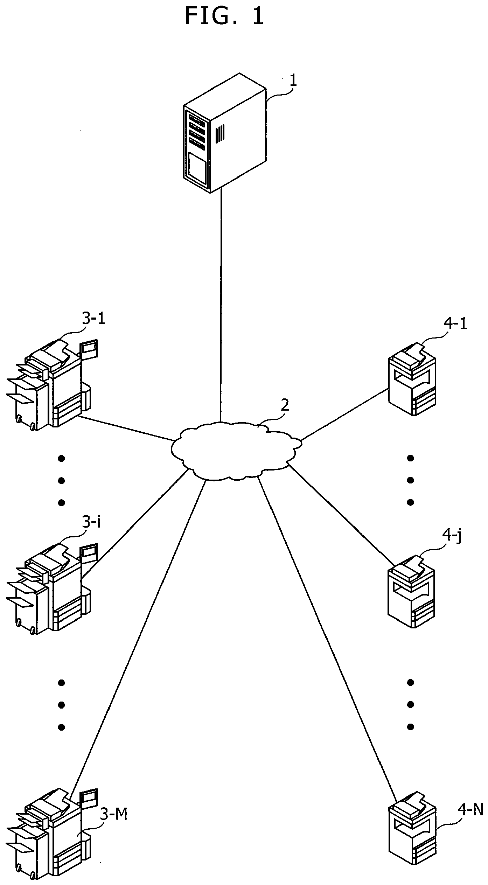

Fig. 1 shows a block diagram that indicates a configuration of an image forming system in an embodiment of the present invention. In the system shown in Fig. 1, a management server 1 is connected to a network 2, and plural image forming apparatuses 3-1 to 3-M and 4-1 to 4-N are connected to the network 2.

The management server 1 manages setting data that indicates settings applied to sorts of functions in the image forming apparatuses 3-1 to 3-M and 4-1 to 4-N.

The network 2 includes a LAN (Local Area Network) such as intranet, a WAN (Wide Area Network) such as Internet, and/or the like.

The image forming apparatus 3-i (i = 1, ..., M; M > 0) is a printer, a multi function peripheral or the like, and the image forming apparatus 4-j (j = 1, ..., N; N > 0) is a printer, a multi function peripheral or the like.

The image forming apparatus 3-i is a first class image forming apparatus that includes a specific sensor that measures a specific device status, and automatically edits setting data on the basis of a measurement value of the specific sensor.

For example, the image forming apparatuses 3-i and 4-j include electrographic printing mechanisms. Each of these printing mechanisms irradiates a photoconductor drum with laser light using an exposure device and thereby forms an electrostatic latent image on the photoconductor drum, and causes toner to adhere to the electrostatic latent image using a development device. A surface layer of the photoconductor drum in such printing mechanisms is worn away in a printing action.

Here the image forming apparatus 3-i measures a surface potential of the photoconductor drum using a surface potential sensor, and automatically corrects a setting such as a surface potential of the photoconductor drum, laser light intensity and/or the like on the basis of the measured surface potential.

This surface potential sensor is an example of the aforementioned specific sensor.

Further, the image forming apparatus 4-j is a second class image forming apparatus that does not includes such a specific sensor that measures a specific device status, and therefore in a standalone status, can not automatically edit setting data.

For example, a surface potential sensor is expensive and therefore is not installed in the image forming apparatus 4-j. Even in the image forming apparatus 4-j, it is possible to adjust a setting such as a surface potential of the photoconductor drum, a laser light intensity and the like in accordance with a predetermined correction algorithm (a mathematical function, table or the like) on the basis of measurement information such as a printed paper sheet quantity, a used sheet type, a sheet orientation in sheet transportation, a coverage rate, a charging time length, a driving time length of the photoconductor drum and the like. However, such adjustment method sometimes results in an improper setting due to some action conditions.

For example, the image forming apparatuses 3-i and 4-j are located in a single site or distributed in plural sites different from each other. Further, for example, the image forming apparatuses 3-i and 4-j are located in a single region (city, town or village; county; province; state; country or the like) site or distributed in plural regions different from each other.

One or plural machine group are constituted by these image forming apparatuses 3-i and 4-j. One machine group includes at least one of the image forming apparatuses 3-i and at least one of the image forming apparatuses 4-j so that a service person determines that the at least one of the image forming apparatuses 3-i and the at least one of the image forming apparatuses 4-j are in a common condition regarding a predetermined factor. For example, an action condition is used as this factor (e.g. a site where the apparatus is installed, a region where the apparatus is installed, user's preference of image quality of a printed matter, or the like).

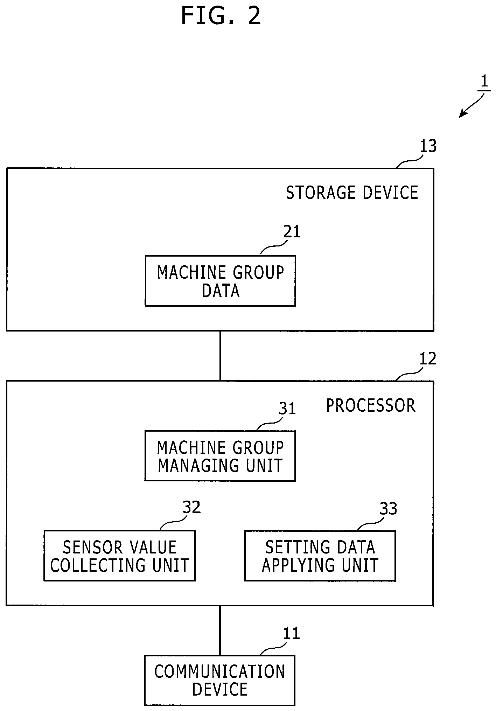

Fig. 2 shows a block diagram that indicates a configuration of a management server 1 shown in Fig. 1. The management server 1 shown in Fig. 2 includes a communication device 11 such as a network interface, a processor 12 such as a computer that executes a predetermined program, and a non-volatile storage device 13 that stores sorts of data.

Machine group data 21 is stored in the storage device 13. The machine group data 21 includes, for each machine group, (a) a machine group ID, (b) a machine ID, network identification information and a machine type information of a first class image forming apparatuses 3-i that belongs to this machine group, and (c) a machine ID, network identification information and a machine type information of a second class image forming apparatuses 4-i that belongs to this machine group and the like so as to associate them with each other.

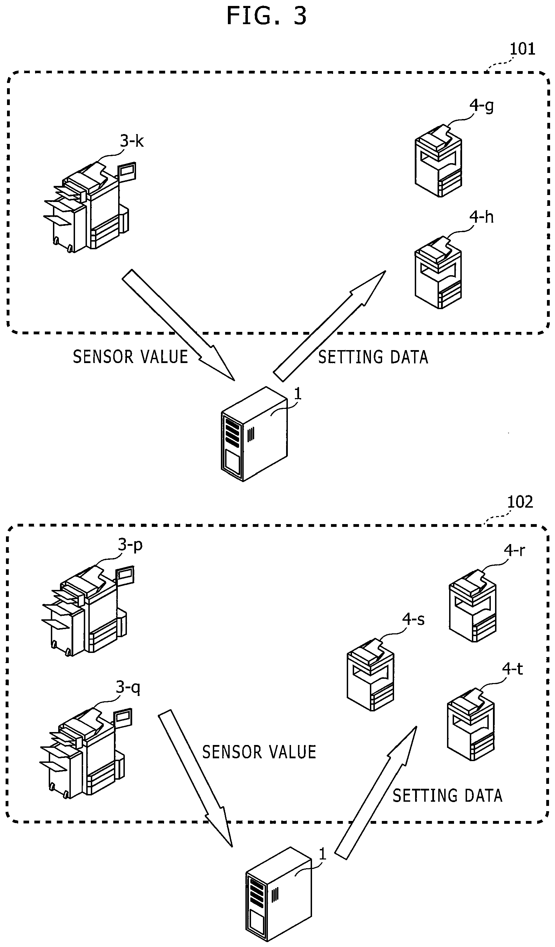

Fig. 3 shows a diagram that explains a machine group in the image forming system shown in Fig. 1. For example, a machine group 101 shown in Fig. 3 includes a first class image forming apparatus 3-k and second class image forming apparatuses 4-g and 4-h, and a machine group 102 shown in Fig. 3 includes first class image forming apparatuses 3-p and 3-q and second class image forming apparatuses 4-r, 4-s and 4-t.

Returning to Fig. 2, the processor 12 acts as a machine group managing unit 31, a sensor value collecting unit 32 and a setting data applying unit 33.

The machine group managing unit 31 edits the machine group data 21 and thereby sets the aforementioned machine group on the basis of an instruction from a service person or the like.

For example, the machine group managing unit 31 sets a machine group that includes (a) one or plural first class image forming apparatuses 3-i specified by a service person and (b) one or plural second class image forming apparatuses 4-j specified by a service person. In such a case, the service person performs an operation to an unshown management terminal for specifying one or plural first class image forming apparatuses 3-i and one or plural second class image forming apparatuses 4-j that should belong to a machine group that the service person wants to form on the basis of the aforementioned factor, and the management terminal notifies the machine group managing unit 31 of the management server 1 via the network 2 of the one or plural first class image forming apparatuses 3-i and the one or plural second class image forming apparatuses 4-j specified by the service person.

The sensor value collecting unit 32 collects measurement values of sorts of sensors that includes the specific sensor of the image forming apparatus 3-i (i.e. a type of a sensor not included in the image forming apparatus 4-i) from the first class image forming apparatus 3-i that belongs to a machine group via the network 2 using the communication device 11. The sensor value collecting unit 32 may collect only one or more measurement values required to generate setting data to be applied to the image forming apparatus 4-j.

Further, if necessary, the sensor value collecting unit 32 collects current setting data and a measurement value of a sensor (e.g. temperature sensor) that is not the specific sensor from a second class image forming apparatus 4-j in a machine group via the network 2 using the communication device 11.

It should be noted that the first class image forming apparatus 3-i has a function to transmit a setting change notice to the management server 1 when the setting data is changed in this first class image forming apparatus 3-i, and a function to transmit a measurement value of a sensor in this image forming apparatus 3-i to the management server 1 (for example, when receiving a request from the management server 1). In addition, the second class image forming apparatus 4-j has a function to transmit a measurement value of a sensor in this image forming apparatus 4-j to the management server 1 (for example, when receiving a request from the management server 1).

The setting data applying unit 33 generates setting data for the second class image forming apparatus 4-j on the basis of the measurement value of the specific sensor and the like among the one or more measurement values collected by the sensor value collecting unit 32, and applies the generated setting data to the second class image forming apparatus 4-j via the network 2 using the communication device 11.

For example, the setting data applying unit 33 estimates change in time of an internal status (e.g. a surface potential of the photoconductor drum) of the image forming apparatus 4-j in this machine group on the basis of change in time of the collected measurement value, determines a changing amount of a setting of the image forming apparatus 4-j in accordance with the estimated change in time of the internal status, determines and sets a value of setting data to be applied (e.g. a corrected value of a surface potential of the photoconductor drum of the image forming apparatus 4-j), on the basis of the determined changing amount and the current setting value.

In this process, if necessary, the setting data applying unit 33 generates the setting data for the second class image forming apparatus 4-j on the basis of (a) measurement values of the specific sensor and another sensor in the first class image forming apparatus 3-i and (b) a measurement value of a sensor in the second class image forming apparatus 4-j and the current setting data of the image forming apparatus 4-j.

Further, the second class image forming apparatus 4-j has a function to update the setting data of this apparatus 4-j with the setting data provided by the management server 1.

If necessary, the setting data applying unit 33 derives a value of the setting data for the second class image forming apparatus 4-j on the basis of the measurement values of the first class image forming apparatus 3-i and the machine type information in the machine group data 21. A characteristic of the change in time of the internal status of the image forming apparatus 4-j depends on a machine type, and therefore, the change in time of the internal status of the image forming apparatus 4-j is estimated in consideration of the machine type.

Further, in Embodiment 1, if the sensor value collecting unit 32 detects that a first class image forming apparatus 3-i automatically edited the setting data, the sensor value collecting unit 32 collects the measurement value from a first class image forming apparatus 32 that belongs to a machine group to which the first class image forming apparatus that automatically edited the setting data belongs. The setting data applying unit 33 applies the generated setting data to a second class image forming apparatus 4-j that belongs to the machine group to which the first class image forming apparatus 3-i that automatically edited the setting data belongs.

It should be noted that if measurement values are collected from plural first class image forming apparatuses 3-i, the setting data applying unit 33 generates plural sets of the setting data for the second class image forming apparatus 4-j on the basis of the measurement values collected from the plural first class image forming apparatuses 3-i, respectively, and calculates an average value of the generated plural sets of the setting data for each setting item, as a value to be actually applied to the setting item. As mentioned, if plural measurement values are collected from plural first class image forming apparatuses 3-i, the setting data is generated to be applied to the second class image forming apparatus 4-j in the aforementioned manner.

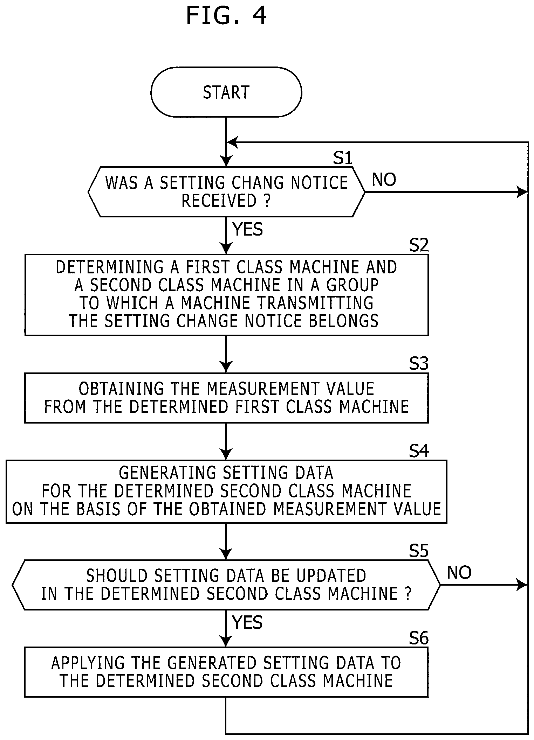

The following part explains a behavior of the management server 1 shown in Fig. 2. Fig. 4 shows a flowchart that explains a behavior of the management server 1 shown in Fig. 2.

When a setting (e.g. the aforementioned corrected value) was automatically edited in a first class image forming apparatus 3-i, a setting change notice is transmitted from this image forming apparatus 3-i to the management server 1.

In the management server 1, the sensor value collecting unit 32 watches whether a setting change notice is received by the communication device 11 or not (in Step S1); and if a setting change notice was received, the sensor value collecting unit 32 identifies the first class image forming apparatus 3-i that transmitted the setting change notice, and on the basis of the machine group data 21, determines both one or plural first class image forming apparatuses 3-i and one or plural second class image forming apparatuses 4-j that belong to a machine group to which the identified image forming apparatus 3-i belongs (in Step S2).

From the determined first class image forming apparatus 3-i, the sensor value collecting unit 32 obtains one or more measurement values of the specific sensor and the like in each of the determined one or plural first class image forming apparatuses 3-i that belongs to this machine group (in Step S3). In this process, if necessary, the sensor collecting unit 32 obtains a measurement value of a sensor in the second class image forming apparatus 4-j and setting data of the second class image forming apparatus 4-j.

Subsequently, the setting data applying unit 33 generates setting data for the determined one or more second class image forming apparatuses 4-j in this machine group, on the basis of the collected measurement values of the one or plural first class image forming apparatuses 3-i and the like (in Step S4). Here if plural second class image forming apparatuses 4-j are determined, the setting data for each of the plural second class image forming apparatuses 4-j is generated on the basis of not only the measurement value of the specific sensor but the measurement value and the setting data obtained from this second class image forming apparatuses 4-j as a target of generating the setting data.

The setting data applying unit 33 determines whether the generated setting data should be applied to the determined one or plural second class image forming apparatuses 4-j in this machine group or not, on the basis of the generated setting data (in Step S5).

For example, if a value of the generated setting data and a value of the current setting data are substantially same as each other, then the setting data applying unit 33 determines that the generated setting data should not be applied to the determined second class image forming apparatus 4-j in this machine group.

If it is determined that the generated setting data should be applied to the determined one or plural second class image forming apparatuses 4-j in this machine group, then the setting data applying unit 33 transmits the generated setting data to the determined one or plural second class image forming apparatuses 4-j in this machine group and thereby applies the generated setting data to the determined one or plural second class image forming apparatuses 4-j in this machine group (in Step S6).

As mentioned, in Embodiment 1, each first class image forming apparatus 3-i includes a specific sensor that measures a specific device status, and automatically edits setting data on the basis of a measurement value of the specific sensor; and each second class image forming apparatus 4-j does not include such a specific sensor that measures the specific device status. The management server 1 includes the machine group managing unit 31 that sets a machine group that includes (a) at least one first class image forming apparatus 3-i and (b) at least one second class image forming apparatus 4-j; the sensor value collecting unit 32 that collects a measurement value of the specific sensor from the first class image forming apparatus 3-i that belongs to the machine group; and the setting data applying unit 33 that generates setting data for the second class image forming apparatus 4-j that belongs to the machine group on the basis of the collected measurement value, and applies the generated setting data to the second class image forming apparatus 4-j.

Consequently, proper setting data is automatically applied to the image forming apparatus 4-j to which such proper setting data can not be automatically applied in a standalone status.

### Embodiment 2.

In Embodiment 2, if it is detected that the setting data was manually edited in a second class image forming apparatus 4-j by a service person or the like, this second class image forming apparatus 4-j transmits a setting change notice to the management server 1, and this setting change notice indicates that the setting data was manually edited.

In the management server 1, when the sensor value collecting unit 32 receives the setting change notice and thereby detects that the setting data was manually edited, the sensor value collecting unit 32 collects a measurement value of a sensor and setting data from the second class image forming apparatus 4-j in which the setting data was manually edited. Subsequently, the setting data applying unit 33 (a) determines a machine group to which the second class image forming apparatus 4-j in which the setting data was manually edited belongs, (b) on the basis of the collected measurement value and the collected setting data, generates setting data for another second class image forming apparatus 4-k that belongs to the machine group to which the second class image forming apparatus 4-j in which the setting data was manually edited belongs, and (c) applies the generated setting data to the another second class image forming apparatus 4-k.

Other parts of the configuration and behaviors of the image forming system in Embodiment 2 are identical or similar to those in Embodiment 1, and therefore not explained here.

It should be understood that various changes and modifications to the embodiments described herein will be apparent to those skilled in the art. Such changes and modifications may be made without departing from the scope of the present subject matter as defined by the appended claims.

For example, in Embodiment 1 or 2, the setting data applying unit 33 may perform the following process, that is (a) obtaining measurement information required for the aforementioned correction algorithm from the image forming apparatus 4-j, determining a setting based on the aforementioned correction algorithm in the image forming 170124EN-spec.doc apparatus 4-j (e.g. a corrected value of a surface potential, a corrected value of laser light intensity, and/or the like), and determining whether the setting determined by this correction algorithm is proper or not, on the basis of time transition of the aforementioned measurement value and time transition of the aforementioned setting data (e.g. a corrected value of a surface potential, a corrected value of laser light intensity, and/or the like), and (b) not applying the determined setting to the image forming apparatus 4-j if the setting determined by the further correction algorithm is proper, because the correction is not required, and applying the determined setting to the image forming apparatus 4-j if the setting determined by the correction algorithm is not proper, because the further correction is required. Further, the setting data applying unit 33 may store a determination result of whether the setting determined by this correction algorithm is proper or not in the storage device 13 so that the aforementioned management terminal can browse this determination result.

## Claims

1. An image forming system, comprising:
one or plural first class image forming apparatuses (3-i; 3-k; 3-p, 3-q) connected to a network (2);
one or plural second class image forming apparatuses (4-j; 4-g, 4-h; 4-r, 4-s, 4-t) connected to the network (2); and
a management server connected to the network (2);
wherein each of the one or plural first class image forming apparatuses (3-i; 3-k; 3-p, 3-q) comprises a specific sensor that measures a specific device status, and automatically edits setting data on the basis of a measurement value of the specific sensor;
each of the one or plural second class image forming apparatuses (4-j; 4-g, 4-h; 4-r, 4-s, 4-t) does not comprise a specific sensor that measures the specific device status; and
the management server comprises:
a machine group managing unit (31) configured to set a machine group that includes (a) at least one of the one or plural first class image forming apparatuses (3-i; 3-k; 3-p, 3-q) and (b) at least one of the one or plural second class image forming apparatuses (4-j; 4-g, 4-h; 4-r, 4-s, 4-t);
a sensor value collecting unit (32) configured to collect a measurement value of the specific sensor from the first class image forming apparatus (3-i; 3-k; 3-p, 3-q) that belongs to the machine group; and
a setting data applying unit (33) configured to generate setting data for the second class image forming apparatus (4-j; 4-g, 4-h; 4-r, 4-s, 4-t) that belongs to the machine group on the basis of the collected measurement value, and apply the generated setting data to the second class image forming apparatus (4-j; 4-g, 4-h; 4-r, 4-s, 4-t), **characterized in that**,
if the sensor value collecting unit (32) detects that the first class image forming apparatus (3-i; 3-k; 3-p, 3-q) automatically edited the setting data, the sensor value collecting unit collects the measurement value from the first class image forming apparatus (3-i; 3-k; 3-p, 3-q) that belongs to the machine group to which the first class image forming apparatus (3-i; 3-k; 3-p, 3-q) that automatically edited the setting data belongs; and
the setting data applying unit (33) applies the generated setting data to the second class image forming apparatus (4-j; 4-g, 4-h; 4-r, 4-s, 4-t) that belongs to the machine group to which the first class image forming apparatus (3-i; 3-k; 3-p, 3-q) that automatically edited the setting data belongs.

2. The image forming system according claim 1, wherein
if it is detected that the setting data was manually edited in the second class image forming apparatus (4-j; 4-g, 4-h; 4-r, 4-s, 4-t), the sensor value collecting unit (32) collects the setting data from the second class image forming apparatus (4-j; 4-g, 4-h; 4-r, 4-s, 4-t) in which the setting data was manually edited; and
the setting data applying unit (33) generates setting data for another second class image forming apparatus (4-j; 4-g, 4-h; 4-r, 4-s, 4-t) that belongs to the machine group to which the second class image forming apparatus (4-j; 4-g, 4-h; 4-r, 4-s, 4-t) in which the setting data was manually edited belongs, and applies the generated setting data to the another second class image forming apparatus (4-j; 4-g, 4-h; 4-r, 4-s, 4-t).

3. The image forming system according claim 1, wherein the machine group managing unit (31) sets as the machine group a machine group that includes (a) at least one specified by a service person among the one or plural first class image forming apparatuses (3-i; 3-k; 3-p, 3-q) and (b) at least one specified by a service person among the one or plural second class image forming apparatuses (4-j; 4-g, 4-h; 4-r, 4-s, 4-t).

## Patentansprüche

1. Bilderzeugungssystem mit:
einem Bilderzeugungsgerät erster Klasse (3-i; 3-k; 3-p, 3-q), das mit einem Netzwerk (2) verbunden ist, oder mehrere von diesen,
einem Bilderzeugungsgerät zweiter Klasse (4-j; 4-g, 4-h; 4-r, 4-s, 4-t), das mit dem Netzwerk (2) verbunden ist, oder mehrere von diesen und
einem Verwaltungsserver, der mit dem Netzwerk (2) verbunden ist,
wobei jedes der einen oder mehreren Bilderzeugungsgeräte erster Klasse (3-i; 3-k; 3-p, 3-q) einen spezifischen Sensor aufweist, der einen spezifischen Gerätestatus misst, und Einstelldaten auf der Grundlage eines Messwertes des spezifischen Sensors automatisch editiert,
wobei jedes der einen oder mehreren Bilderzeugungsgeräte zweiter Klasse (4-j; 4-g, 4-h; 4-r, 4-s, 4-t) keinen spezifischen Sensor aufweist, der den spezifischen Gerätestatus misst, und
wobei der Verwaltungsserver aufweist:
eine Maschinengruppenverwaltungseinheit (31), die konfiguriert ist, um eine Maschinengruppe festzulegen, die (a) wenigstens eines der einen oder mehreren Bilderzeugungsgeräte erster Klasse (3-i; 3-k; 3-p, 3-q) und (b) wenigstens eines der einen oder mehreren Bilderzeugungsgeräte zweiter Klasse (4-j; 4-g, 4-h; 4-r, 4-s, 4-t) aufweist;
eine Sensorwertsammeleinheit (32), die konfiguriert ist, einen Messwert des spezifischen Sensors von dem Bilderzeugungsgerät erster Klasse (3-i; 3-k; 3-p, 3-q), das der Maschinengruppe angehört, zu sammeln, und
eine Einstelldatenanwendeeinheit (33), die konfiguriert ist, Einstelldaten für das Bilderzeugungsgerät zweiter Klasse (4-j; 4-g, 4-h; 4-r, 4-s, 4-t), das der Maschinengruppe angehört, auf der Grundlage des gesammelten Messwerts zu generieren und die generierten Einstelldaten auf das Bilderzeugungsgerät zweiter Klasse (4-j; 4-g, 4-h; 4-r, 4-s, 4-t) anzuwenden, **dadurch gekennzeichnet, dass**
wenn die Sensorwertsammeleinheit (32) erkennt, dass das Bilderzeugungsgerät erster Klasse (3-i; 3-k; 3-p, 3-q) die Einstelldaten automatisch editiert hat, die Sensorwertsammeleinheit (32) den Messwert von dem Bilderzeugungsgerät erster Klasse (3-i; 3-k; 3-p, 3-q) sammelt, das der Maschinengruppe angehört, zu der das Bilderzeugungsgerät erster Klasse (3-i; 3-k; 3-p, 3-q) gehört, das die Einstelldaten automatisch editiert hat, und
die Einstelldatenanwendeeinheit (33) die generierten Einstelldaten auf das Bilderzeugungsgerät zweiter Klasse (4-j; 4-g, 4-h; 4-r, 4-s, 4-t) anwendet, das der Maschinengruppe angehört, zu der das Bilderzeugungsgerät erster Klasse (3-i; 3-k; 3-p, 3-q) gehört, das die Einstelldaten automatisch editiert hat.

2. Bilderzeugungssystem nach Anspruch 1, wobei
wenn erkannt wird, dass die Einstelldaten in dem Bilderzeugungsgerät zweiter Klasse (4-j; 4-g, 4-h; 4-r, 4-s, 4-t) manuell editiert wurden, die Sensorwertsammeleinheit (32) die Einstelldaten von dem Bilderzeugungsgerät zweiter Klasse (4-j; 4-g, 4-h; 4-r, 4-s, 4-t), in dem die Einstelldaten manuell editiert wurden, sammelt, und
die Einstelldatenanwendeeinheit (33) Einstelldaten für ein anderes Bilderzeugungsgerät zweiter Klasse (4-j; 4-g, 4-h; 4-r, 4-s, 4-t) generiert, das der Maschinengruppe angehört, zu der das Bilderzeugungsgerät zweiter Klasse (4-j; 4-g, 4-h; 4-r, 4-s, 4-t) gehört, in dem die Einstelldaten manuell editiert wurden, und die generierten Einstelldaten auf ein anderes Bilderzeugungsgerät zweiter Klasse (4-j; 4-g, 4-h; 4-r, 4-s, 4-t) anwendet.

3. Bilderzeugungssystem nach Anspruch 1, wobei die Maschinengruppenverwaltungseinheit (31) als die Maschinengruppe eine Maschinengruppe einstellt, die (a) wenigstens eines der einen oder mehreren Bilderzeugungsgeräte erster Klasse (3-i; 3-k; 3-p, 3-q), das durch eine Serviceperson spezifiziert ist, aufweist und (b) wenigstens eines der einen oder mehreren Bilderzeugungsgeräte zweiter Klasse (4-j; 4-g, 4-h; 4-r, 4-s, 4-t), das durch eine Serviceperson spezifiziert ist, aufweist.

## Revendications

1. Système de formation d'images, comprenant :
un ou plusieurs appareils de formation d'images de première classe (3-i ; 3-k ; 3-p, 3-q) connectés à un réseau (2) ;
un ou plusieurs appareils de formation d'images de seconde classe (4-j ; 4-g, 4-h ; 4-r, 4-s, 4-t) connectés au réseau (2) ; et
un serveur de gestion connecté au réseau (2) ;
dans lequel chaque appareil dudit un ou desdits plusieurs appareils de formation d'images de première classe (3-i ; 3-k ; 3-p, 3-q) comprend un capteur spécifique qui mesure un état de dispositif spécifique, et modifie automatiquement des données de définition sur la base d'une valeur de mesure du capteur spécifique ;
chaque appareil dudit un ou desdits plusieurs appareils de formation d'images de seconde classe (4-j ; 4-g, 4-h ; 4-r, 4-s, 4-t) ne comprend pas de capteur spécifique qui mesure l'état de dispositif spécifique ; et
le serveur de gestion comprend :
une unité de gestion de groupe de machines (31) configurée de manière à définir un groupe de machines qui inclut (a) au moins l'un dudit un ou desdits plusieurs appareils de formation d'images de première classe (3-i ; 3-k ; 3-p, 3-q) et (b) au moins l'un dudit un ou desdits plusieurs appareils de formation d'images de seconde classe (4-j ; 4-g, 4-h ; 4-r, 4-s, 4-t) ;
une unité de collecte de valeur de capteur (32) configurée de manière à collecter une valeur de mesure du capteur spécifique à partir de l'appareil de formation d'images de première classe (3-i ; 3-k ; 3-p, 3-q) qui appartient au groupe de machines ; et
une unité d'application de données de définition (33) configurée de manière à générer des données de définition pour l'appareil de formation d'images de seconde classe (4-j ; 4-g, 4-h ; 4-r, 4-s, 4-t) qui appartient au groupe de machines, sur la base de la valeur de mesure collectée, et à appliquer les données de définition générées à l'appareil de formation d'images de seconde classe (4-j ; 4-g, 4-h ; 4-r, 4-s, 4-t), **caractérisé en ce que**,
si l'unité de collecte de valeur de capteur (32) détecte que l'appareil de formation d'images de première classe (3-i ; 3-k ; 3-p, 3-q) a modifié automatiquement les données de définition, l'unité de collecte de valeur de capteur collecte la valeur de mesure auprès de l'appareil de formation d'images de première classe (3-i ; 3-k ; 3-p, 3-q) qui appartient au groupe de machines auquel appartient l'appareil de formation d'images de première classe (3-i ; 3k ; 3-p, 3-q) qui a modifié automatiquement les données de définition ; et
l'unité d'application de données de définition (33) applique les données de définition générées à l'appareil de formation d'images de seconde classe (4-j ; 4-g, 4-h ; 4-r, 4-s, 4-t) qui appartient au groupe de machines auquel appartient l'appareil de formation d'images de première classe (3-i ; 3-k ; 3-p, 3-q) qui a modifié automatiquement les données de définition.

2. Système de formation d'images selon la revendication 1, dans lequel :
s'il est détecté que les données de définition ont été modifiées manuellement dans l'appareil de formation d'images de seconde classe (4-j ; 4-g, 4-h ; 4-r, 4-s, 4-t), l'unité de collecte de valeur de capteur (32) collecte les données de définition auprès de l'appareil de formation d'images de seconde classe (4-j ; 4-g, 4-h ; 4-r, 4-s, 4-t) dans lequel les données de définition ont été modifiées manuellement ; et
l'unité d'application de données de définition (33) génère des données de définition pour un autre appareil de formation d'images de seconde classe (4-j ; 4-g, 4-h ; 4-r, 4-s, 4-t) qui appartient au groupe de machines auquel appartient l'appareil de formation d'images de seconde classe (4-j ; 4-g, 4-h ; 4-r, 4-s, 4-t) dans lequel les données de définition ont été modifiées manuellement, et applique les données de définition générées audit un autre appareil de formation d'images de seconde classe (4-j ; 4-g, 4-h ; 4-r, 4-s, 4-t).

3. Système de formation d'images selon la revendication 1, dans lequel l'unité de gestion de groupe de machines (31) définit, en tant que le groupe de machines, un groupe de machines qui inclut (a) au moins un appareil spécifié, par un agent de service, parmi ledit un ou lesdits plusieurs appareils de formation d'images de première classe (3-i ; 3-k ; 3-p, 3-q), et (b) au moins un appareil spécifié, par un agent de service, parmi ledit un ou lesdits plusieurs appareils de formation d'images de seconde classe (4-j ; 4-g, 4-h ; 4-r, 4-s, 4-t).
